**Europäisches Patentamt**

**European Patent Office**

**Office européen des brevets**

(19)

(11) Veröffentlichungsnummer : **0 257 075 B1**

## (12) EUROPÄISCHE PATENTSCHRIFT

(45) Veröffentlichungstag der Patentschrift :
**15.07.92 Patentblatt 92/29**

(51) Int. Cl.⁵ : **G02C 1/02**

(21) Anmeldenummer : **87901467.8**

(22) Anmeldetag : **27.02.87**

(86) Internationale Anmeldenummer :
**PCT/EP87/00117**

(87) Internationale Veröffentlichungsnummer :
**WO 87/05405 11.09.87 Gazette 87/20**

---

(54) **BRILLE, INSBESONDERE SONNENBRILLE.**

---

(30) Priorität : **01.03.86 DE 8605669 U**

(43) Veröffentlichungstag der Anmeldung :
**02.03.88 Patentblatt 88/09**

(45) Bekanntmachung des Hinweises auf die
Patenterteilung :
**15.07.92 Patentblatt 92/29**

(84) Benannte Vertragsstaaten :
**AT CH DE FR IT LI**

(56) Entgegenhaltungen :
**DE-A- 3 032 012**
**FR-A- 2 503 878**
**FR-A- 2 503 879**
**FR-A- 2 538 920**

(56) Entgegenhaltungen :
**GB-A- 2 123 574**
**US-A- 4 176 921**
**Patent Abstracts of Japan, vol. 7, No: 164,**
**(p-211) (1309) 19 July 1983 & JP A 5872918**

(73) Patentinhaber : **POLAROID CORPORATION**
**549 Technology Square**
**Cambridge Massachusetts 02139 (US)**

(72) Erfinder : **POLAROID CORPORATION**
**549 Technology Square**
**Cambridge Massachusetts 02139 (US)**

(74) Vertreter : **Wallach, Curt, Dipl.-Ing.**
**Patentanwälte Wallach, Koch, Dr. Haibach,**
**Feldkamp et al**
**P.O. Box 121120**
**W-8000 München 12 (DE)**

EP 0 257 075 B1

**Beschreibung**

Die vorliegende Erfindung bezieht sich auf eine Brille, insbesondere Sonnenbrille nach dem Oberbegriff des Patentanspruchs 1.

Insbesondere bei Sonnenbrillen besteht beim kauf ein Problem darin, welche Gläser die richtigen sind, d.h. ob die Sonnenbrille vorzugsweise während des Alltags im Sommer, während des Urlaubs am Strand oder im Winter in den Bergen bei Schnee verwendet werden soll. Davon abhängig ist die Intensität der Tönung (der Grad der Lichtabsorption) der Gläser. Als Kompromiss werden manchmal phototrope Gläser verwendet, deren Absorptionsstufe sich mit der Veränderung der Umgebungshelligkeit ändert. Aber auch hier gibt es Gläser mit unterschiedlicher Grundtönung und daher unterschiedlicher maximaler Tönungsmöglichkeit. Dies gilt auch für Brillen mit geschliffenen Gläsern, wenn hierbei phototrope Gläser eingesetzt werden. Bei Sonnenbrillen werden vielfach auch außen verspiegelte Gläser verwendet. Da insbesondere die Brillengestelle je nach Design recht teuer sind, ist es für den Benutzer sehr kostenaufwendig, sich mehrere Brillen anzuschaffen.

Eine gattungsgemäße Brille ist durch die FR-A-2 503 878 bekannt. Hierbei weist die Klemmvorrichtung 2 Klemmhebel auf, die um einen die beiden Glasfassungen verbindenden Brückensteg einzeln schwenkbar sind und hakenförmige Stege zum Erfassen der Gläser tragen. Die Klemmhebel sind an einem weiteren Brückensteg federnd einrastbar.

Eine weitere gattungsgemäße Brille ist aus der US-A-4 176 921 bekannt. Hierbei besteht die Klemmvorrichtung aus einem Klemmbügel, dessen beide Schenkel an einem Brückensteg schwenkbar gelagert sind und hakenförmige Stege tragen, mit denen sie in Schließstellung am Rand der Gläser anliegen. Der Klemmbügel ist mittels eines Verriegelungsarmes an einem weiteren Brückensteg federnd festklemmbar.

Bei einer in der FR-A-2 538 920 beschriebenen Brille ist an einem Brückensteg ein nach beiden Seiten ausladender Federbügel angebracht, der hakenförmige Stege zum Erfassen der Gläser trägt. Zum Auswechseln der Gläser werden die beiden federnden Bügelenden angehoben.

Eine ähnliche, mit einem ausrückbaren Klemmhebel für die beiden Brillengläser ausgestattete Brille zeigt die FR-A-2 503 879.

Die in der GB-A-2 123 574 beschriebene Brille weist einen längs der Brücke beweglichen Schlitten auf, der in seiner Schließstellung mit seinen keilförmig verlaufenden Seitenrändern gegen entsprechend abgeschrägte Ränder der Brillengläser wirkt und diese gegen die Haltestege drückt.

Der Erfindung liegt die Aufgabe zugrunde, eine gattungsgemäße Brille bedienungsfreundlich und mit sicherem Halt der Gläser durch die Klemmvorrichtung zu schaffen, wobei die Klemmvorrichtung einfach und aus wenigen Teilen aufgebaut ist, die bei der Herstellung leicht montierbar sind.

Gelöst wird die gestellte Aufgabe durch die im Kennzeichnungsteil des Patentanspruchs 1 angegebenen Merkmale. Durch die Rückstellfeder wird gewährleistet, daß die Klemmvorrichtung die Gläser immer sicher erfaßt. Der Schlitten der Klemmvorrichtung kann entgegen der Kraft der Rückstellfeder leicht ausgehoben werden, worauf die Gläser austauschbar sind. Der Schlitten ist mit seinen Kufen in den Nuten sicher und verkantungsfrei geführt.

Zweckmäßige Ausgestaltungen der Erfindung ergeben sich aus den Unteransprüchen. Danach dient die Brücke nicht nur als Führung für den Schlitten, sondern auch zur Aufnahme der als Druckfeder ausgebildeten Feder. Diese Druckfeder ist in einer Mulde der Brücke in ihrer Länge ganz und hinsichtlich ihres Durchmessers zum Teil aufgenommen, so daß die Feder auf das auf der Brücke aufliegende schlittenartige Teil einwirken kann. Die Druckfeder ist durch ein Abdeckplättchen gehalten, zwischen dem und der Brücke der schlittenartige Teil im von Führungsnuten der Brücke entfernten Bereich geführt ist.

Das Plättchen dient außerdem als Anschlag für den schlittenartigen Teil in seiner Schließstellung und über einen abstehenden und in die Brücke eindringenden Gewindestift zum Halten der Verschiebemechanik in zusammengebautem Zustand.

Weitere Einzelheiten und Ausgestaltungen der Erfindung sind der folgenden Beschreibung zu entnehmen, in der die Erfindung anhand des in der Zeichnung dargestellten Ausführungsbeispieles näher beschrieben und erläutert ist. Es zeigt:

Fig. 1 in teilweise aufgebrochener Vorderansicht eine Sonnenbrille mit einer Mechanik zum Auswechseln der Gläser gemäß einem bevorzugten Ausführungsbeispiel vorliegender Erfindung;

Fig. 2 einen Schnitt längs der Linie II-II der Fig. 1, wobei der obere Teil ohne und der untere Teil mit eingesetztem Brillenglas dargestellt ist;

Fig. 3 einen Schnitt längs der Linie III-III der Fig. 1;

Figuren 4A u. B in vergrößerter Darstellung eine Draufsicht auf die Brücke des Brillengestells, ohne Gläser, bzw. einen Schnitt längs der Linie IVB-IVB der Fig. 4A;

Figuren 5A u. B in vergrößerter Darstellung die Vorderansicht des schlittenförmigen Teils der genannten Mechanik zum Auswechseln der Gläser bzw. einen Schnitt längs der Linie VB-VB der Fig. 5A und

2

Figuren 6A u. B in vergrößerter Darstellung eine Draufsicht auf ein Abdeckplättchen der genannten Mechanik zum Auswechseln der Gläser bzw. einen Schnitt längs der Linie VIB-VIB der Fig. 6A.

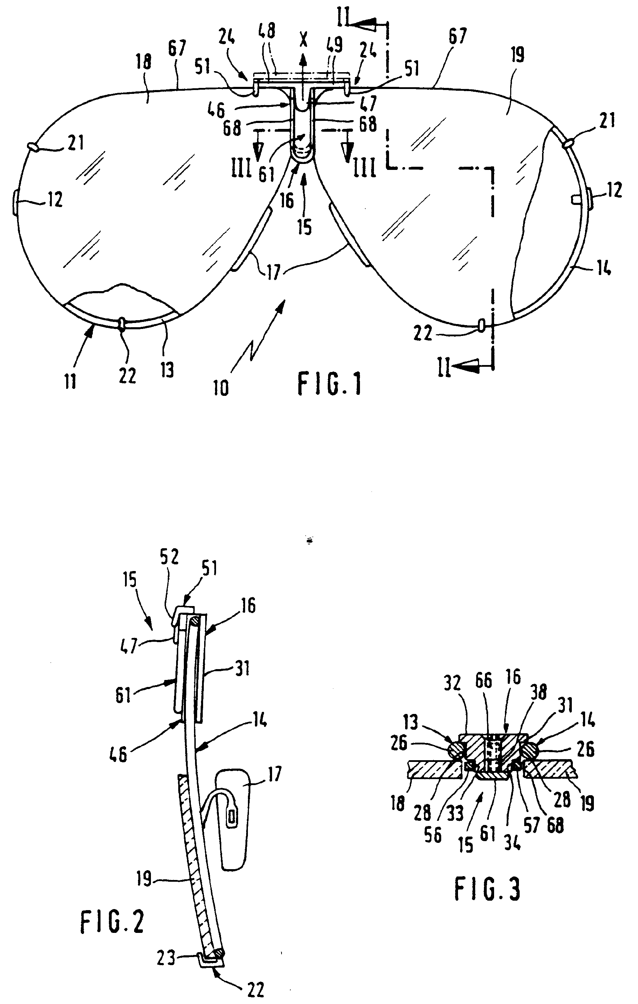

Die in der Zeichnung dargestellte Sonnenbrille 10, die mit einer Mechanik 15 zum auswechselbaren Halten von Gläsern 18, 19 versehen ist, besitzt ein Brillengestell 11, das über ortsfeste Bügelteile 12 mit nicht dargestellten schwenkbaren Bügelteilen verbunden ist. Die beiden Fassungen 13, 14 des Gestells 11, die mit je einer Nasenauflage 17 versehen sind, sind über eine Brücke 16 starr miteinander verbunden. Auf der Außenseite der Fassungen 13, 14 liegen die Gläser 18, 19 auf, die in einem Bereich oberhalb des ortsfesten Bügelteiles 12 und in einem unteren Bereich mittels an den Fassungen 13, 14 senkrecht abstehend befestigten hakenförmigen Stegen 21 und 22 in der Weise gehalten, daß die nach innen umgebogenen Enden 23 der Stege 21, 22 die Brillengläser 18, 19 übergreifen. Ein jeweils dritter, aus seiner Schließstellung in eine Öffnungsstellung bewegbarer Haltebereich 24 für die Brillengläser 18, 19 an der Fassung 13, 14 ist durch die Nechanik 15 gegeben, die im Bereich der Brücke 16 vorgesehen ist und diese mit einschließt. Wie noch zu zeigen sein wird, können die Brillengläser 18, 19 bei Bewegen des beweglichen Teils der Mechanik 15 in ihre Öffnungsstellung gemäß Pfeil X der Fig. 1 abgenommen und durch andere Gläser ersetzt werden.

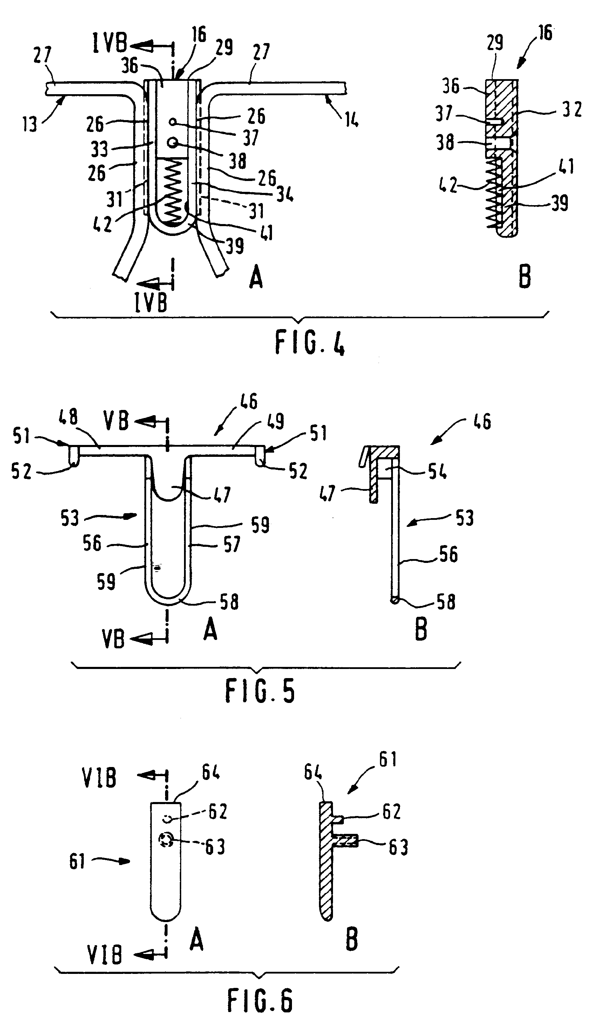

Wie insbesondere der Fig. 4 zu entnehmen ist, ist die Brücke 16 als länglich rechteckförmiger Block ausgebildet, an dessen parallelen Längsseiten 28 ein entsprechend geformter, geradliniger Seitenbereich 26 der Fassungen 13, 14 befestigt, vorzugsweise angelötet ist. Die obere Stirnkante 29 der Brücke 16 ist etwa in Flucht mit dem oberen etwa horizontal verlaufenden Bereich 27 der Fassungen 13, 14. Die Seitenbereiche 26 der Fassungen 13, 14 sind von einer stegartigen Verbreiterung der Brücke 16 teilweise hintergriffen (siehe auch Fig. 3). Der Rückfläche 32 der Brücke 16 abgewandt gehen die Längsseiten 28 der Brücke 16 in parallel zueinander verlaufende Führungsnuten bzw. -ausnehmungen 33, 34 über, die nicht nur zur Seite sondern auch nach vorne hin offen sind. Die Führungsnuten 33, 34 verlaufen von der oberen Stirnseite 29 aus über etwa die halbe Länge der Brücke 16. In diesem seitlich durch die Führungsnuten 33, 34 begrenzten vorspringenden Bereich 36 der Brücke 16 sind in einem Abstand zueinander eine der oberen Stirnkante 29 zugewandte Sacklochnohrung 37 und eine durchmessergrößere Durchgangsbohrung 38 vorgesehen.

An den vorspringenden Bereich 36 schließt sich ein rückspringender Bereich 39 an, der mit einer Mulde 41 versehen ist, deren Breite und Länge etwas kleiner ist als die des zurückspringenden Bedreiches 39.

In die Mulde 41 der Brücke 16 ist eine Druckfeder 42 in leicht vorgespanntem Zustand eingelegt, wobei sie sich einenends am vorspringenden Bereich 36 und anderenends am unteren inneren Rand der Mulde 41 abstützt. Der Duchmesser der Druckfeder 42 ist größer bspw. etwa doppelt so groß wie die Tiefe der Mulde 41.

Außer der Brücke 16 ist Teil der Mechanik 15 ein Schlitten 46, der im Detail in der Fig. 5 dargestellt ist. Der Schlitten 46 besitzt ein nasenförmiges Mittelteil 47, an dessen oberem Ende ein Auslegerarm 48 und ein Auslegerarm 49 einstückig befestigt sind, die ebenfalls einstückig miteinander verbunden sind und einander entgegengesetzt gerichtet sind. Die geradlinig verlaufenden Auslegerarme 48 und 49 besitzen an ihren freien Enden hakenförmige Stege 51, deren Endbereiche 52 die Brillengläser 18, 19 übergreifen. Zu beiden Seiten des Mittelteils 47 sind an den Auslegerarmen 48, 49 Schenkel 56, 57 eines U-förmigen Kufenteils 52 befestigt, das sich parallel zur Brücke 16 erstreckt; die parallelen Schenkel 57, 57 passen in die Führungsnuten 33, 34 der Brücke 16 und sind in einem oberen Bereich mit einem Verbindungssteg 54 zum nasenförmigen Mittelteil 47 hin versehen.

Die Mechanik 15 besitzt ferner ein Deckplättchen 61 (Fig. 6), das etwa länglich rechteckige Form besitzt, dessen unterer Rand jedoch gerundet bzw. halbkreisförmig ist. An seiner Innenseite besitzt das Deckplättchen 61 einen kürzeren Arretierstift 62 und einen längeren und durchmessergrößeren Außengewindestift 63. Die beiden Stifte 62 und 63 sind in einem Abstand entsprechend den Bohrungen 37, 38 der Brücke 16 voneinander entfernt und senkrecht von der Rückseite abstehend angeordnet.

Beim dargestellten Ausführungsbeispiel sind sowohl das Gestell 11 als auch die Mechanik 15 einschließlich der Brücke 16 aus Metall.

Der Zusammenbau und das Zusammenwirken der beschriebenen Teile 16, 42, 46, 61 und einer Zylinder- bzw. Hülsenschraube 66 mit Innengewinde sind folgende:

Auf der Brücke 16, in deren Mulde 41 die Druckfeder 62 leicht vorgespannt eingelegt ist, wird der Schlitten 46 gelegt, so daß die Schenkel 56, 57 des Kufenteils 53 in den Führungsnuten 33, 34 und zu beiden Seiten der Mulde 41 auf dem zurückspringenden Bereich 39 liegen. Dabei ist das untere Ende der Druckfeder 42 vom U-förmigen Bereich 58, der die beiden Schenkel 56, 57 verbindet, umgeben. Außerdem sind die Abmessungen derart, daß die längsverlaufenden Außenränder 59 des Kufenteils 53 mit den Längsseiten 28 der Brücke 16 fluchten. Auf den vorspringenden Bereich 36 der Brücke 17 wird das Deckplättchen 61 aufgesteckt, in der Weise, daß der Arretierstift 62 in die Sacklochbohrung 37 und der Gewindestift 63 in die Durchgangsbohrung 38 eingeführt wird. Dies kann jedoch erst dann erfolgen, wenn der Schlitten 46 entgegen der Wirkung der am U-Teil 58 anliegenden Druckfeder 42 nach oben und in Richtung des Pfeiles X gleitend verschoben worden ist.

Mit einer von der Rückseite 32 der Brücke 16 in die Durchgangsbohrung 38 eingesteckten und auf den Außengewindestift 63 des Deckplättchens 61 aufgeschraubten Hülsenschraube 66 ist der Zusammenbau der Mechanik 15 beendet. Gemäß diesem zusammengebauten Zustand ist die Breite des Deckplättchens 61 etwa gleich der lichten Weite der parallelen Schenkel 56, 57 des Schlittens 46. Da das Deckplättchen 61 bis zum Ende der Mulde 41 im vorspringenden Bereich 36 der Brücke 16 reicht, ist die Druckfeder 42 vollständig abgedeckt. Außerdem ergibt sich durch den entsprechenden Abstand zwischen der Innenseite des Deckplättchens 61 und der Oberfläche des zurückspringenden Bereichs 39, von der die Mulde 41 ausgeht, eine Führung für den U-Bereich 58 des Kufenteils 53.

In der in Fig. 1 in ausgezogenen Linien dargestellten Schließstellung der Mechanik 15, die zwangsweise unter der Wirkung der Druckfeder 42 erfolgt, übergreifen die hakenförmigen Stege 51 des Schlittens 46 die Brillengläser 18, 19. In diesem Zustand liegt die untere Kante der Verbindungsstege 54 des Schlittens 46 an der oberen Stirn 64 des Deckplättchens 61 an, das damit als Anschlag für die Schließstellung dient. In dieser Schließstellung sind die Brillengläser 18, 19 durch die drei Stege 21, 22 und 54 jeweils gegen Wegfallen gesichert. Gegen ein Verschieben der Brillengläser 18, 19 relativ zur Fassung 13,14 ist eine Sicherung dahingehend vorgesehen, daß der innere geradlinige Randbereich 68 der Brillengläser 18, 19 an der betreffenden Außenseite 59 der Schenkel 56, 57 unmittelbar anliegt.

Wird die Mechanik 15 bzw, der Schlitten 46 in die in Fig. 1 strichpunktiert dargestellte Öffnungsstellung in Richtung des Pfeiles X nach oben verschoben (mit dem Daumen auf das Mittelteil 47 einen Schub ausübend), so gelangen die hakenförmigen Stege 51 des Schlittens 46 über den oberen Umfangsrandbereich 67 der Brillengläser 18, 19 hinaus, so daß das betreffende Brillenglas 18 oder 19 mit seinem inneren Randbereich 68 von der Brillenfassung 13 bzw. 14 bis über den vorspringenden Bereich 36 der Brücke 16 weg verschwenkt und dann das Glas zur gegenüberliegenden Fassung hin aus seiner eigenen Fassung gezogen werden kann. Das Einsetzen der Brillengläser 18, 19. erfolgt in entsprechend umgekehrter Weise.

Es versteht sich, daß die Brillengläser, statt vollständig auf der Außenseite der Fassungen aufzuliegen, auch in der Weise mit den Fassungen des Brillengestells in Verbindung sein können, daß sie teilweise oder vollständig darin eingelassen sind. Außerdem ist es auch möglich, daß diese Mechanik zum Auswechseln von Gläsern nicht nur bei Sonnenbrillen mit Gläsern ohne optische Wirkung, sondern auch bei Brillen mit Gläsern mit optischer Wirkung angewendet werden kann.

## Patentansprüche

1. Brille (10) mit manuell auswechselbaren Gläsern (18, 19), bestehend aus zwei Glasfassungen (13, 14) mit hakenförmigen Stegen (21, 22), die über die Gläser übergreifen, einer Brücke (16) zwischen den Glasfassungen (13, 14) und einer an der Brücke (16) befestigten Klemmvorrichtung mit vorzugsweise zwei parallel zur Brücke verlaufenden, beweglichen Auslegen (48, 49), die ebenfalls mit haken förmigen Stegen (51) versehen sind,
dadurch gekennzeichnet, daß die Brücke (16) mit parallelen, in der normalen Tragehaltung der Brille vorzugsweise senkrecht verlaufenden. Führungsnuten (33, 34) versehen ist, die entsprechende Kufen (56, 57) eines Schlittens (46) gleitend aufnehmen, daß der Schlitten (46) die beiden Ausleger (48, 49) trägt, und daß eine Rückstellfeder (42) zwischen der Brücke (16) und dem Schlitten (46) in der Weise angeordnet ist, daß der Schlitten (46) unter der Wirkung der Feder (42) in eine Schließstellung gedrängt wird, in der die Stege (51) der Ausleger (48, 49) die Gläser (18, 19) übergreifen, und daß der Schlitten gegen die Wirkung der Feder (42) in eine Öffnungsstellung bewegbar ist, in der die Stege (51) der Ausleger (48, 49) nicht übergreifen.

2. Brille nach Anspruch 1,
dadurch gekennzeichnet, daß die Brücke (16) eine Mulde (41) aufweist, in der die als Druckfeder (42) ausgebildete Rückstellfeder eingelegt ist, daß die parallelen Kufen (56, 57) an dem der Klemmvorrichtung (48) abgewandten Ende mit einer U-förmigen Verbindung (58) versehen sind, und daß sich die Druckfeder (42) einerseits an dieser U-förmigen Verbindung (58) des Schlittens und andererseits an der Brücke (16) abstützt.

3. Brille nach Anspruch 2,
dadurch gekennzeichnet, daß die in der Mulde (41) des Schlittens (16) eingelegte Feder (42) von einem Blättchen (61) abgedeckt ist, das mit der Brücke (16) verbunden ist.

4. Brille nach Anspruch 3,
dadurch gekennzeichnet, daß das Blättchen (61) mit einem Gewindestift (63) und einem im Abstand dazu angeordneten Arretierstift (62) versehen ist, die in entsprechende Bohrungen (37, 38) eingreifen, und daß das Blättchen (61) auf der Brücke (16) durch eine Hülsenschraube (66) gesichert ist, die auf den Gewindestift (63) aufgeschraubt ist.

5. Brille nach einem der Ansprüche 1 bis 4,

dadurch gekennzeichnet, daß die obere Stirnfläche (64) des Blättchens (61) die Anschlagkante für einen Gegenanschlag (54) des Schlittens (46) in Schließstellung bildet.

6. Brille nach einem der Ansprüche 1 bis 5,
dadurch gekennzeichnet, daß zwischen dem Blättchen (61) und einem gegenüberliegenden Bereich (39) der Brücke (16) die parallelen Kufen (56, 57) in ihrem den Führungsnuten (33, 34) abgewandten Bereich geführt sind.

## Claims

1. Glasses (10) having manually exchangeable lenses (18, 19), consisting of two lens frames (13, 14) with hook-like webs (21, 22) which engage over the lenses, a bridge (16) between the glass frames (13, 14) and a clamping means which is secured to the bridge (16) and comprises preferably two movable cantilever arms (48, 49) which extend parallel to the bridge and which are likewise provided with hook-like webs (51), characterized in that the bridge (16) is provided with parallel guide grooves (33, 34) which preferably extend vertically in the normal wearing attitude of the glasses and which slidingly receive the corresponding skids (56, 57) of a slide (46), that the slide (46) carries the two cantilever arms (48, 49), and that a return spring (42) is arranged between the bridge (16) and the slide (46) in such a manner that under the action of the spring (42) the slide (46) is urged into a closure position in which the webs (51) of the cantilever arms (48, 49) engage over the lenses (18, 19), and that the slide is movable against the action of the spring (42) into an open position in which the webs (51) of the cantilever arms (48, 49) do not engage thereover.

2. Glasses according to claim 1,
characterized in that the bridge (16) comprises a trough (41) in which the return spring formed as pressure spring (42) is inserted, that the parallel skids (56, 57) are provided at the end remote from the clamping means (48) with a U-shaped connection (58) and that the pressure spring (42) bears on the one hand on said U-shaped connection (58) of the slide and on the other hand on the bridge (16).

3. Glasses according to claim 2,
characterized in that the spring (42) inserted in the trough (41) of the slide (16) is covered by a leaf (61) connected to the bridge (16).

4. Glasses according to claim 3,
characterized in that the leaf (61) is provided with a threaded pin (63) and an arresting pin (62) spaced therefrom which engage into corresponding bores (37, 38), and that the leaf (61) is secured on the bridge (16) by a sleeve screw (66) which is screwed onto the threaded pin (63).

5. Glasses according to any one of claims 1 to 4,
characterized in that the upper end face (64) of the leaf (61) forms the abutment edge for a counter stop (54) of the slide (46) in the closure position,

6. Glasses according to any one of claims 1 to 5,
characterized in that between the leaf (61) and an opposite region (39) of the bridge (16) the parallel skids (56, 57) are guided in their region remote from the guide grooves (33, 34).

## Revendications

1. Lunettes (10) avec des verres (18, 19) pouvant être changés manuellement, constituées de deux montures de verre (13, 14) avec des pattes (21, 22) en forme de crochets qui passent sur les verres, d'un pont (16) entre les montures de verre (13, 14) et d'un dispositif de blocage fixé sur le pont (16) et comprenant deux bras (48, 49) mobiles, de préférence parallèles au pont, qui sont également munis de pattes (51) en forme de crochets, caractérisées par le fait que le pont (16) est muni de rainures de guidage (33, 34) parallèles, de préférence verticales dans la position de port normale des lunettes, qui reçoivent de manière coulissante des patins (56, 57) correspondants d'un chariot (46), que le chariot (46) porte les deux bras (48, 49), et qu'un ressort de rappel (42) est disposé entre le pont (16) et le chariot (46) de manière telle que, sous l'action du ressort (42), le chariot (46) soit poussé dans une position de fermeture dans laquelle les pattes (51) des bras (48, 49) passent sur les verres (18, 19), et que le chariot puisse être déplacé, à l'encontre de l'action du ressort (42), dans une position d'ouverture dans laquelle les pattes (51) des bras (48, 49) ne passent pas sur les verres.

2. Lunettes selon la revendication 1,
caractérisées par le fait que le pont (16) présente une cavité (41) dans laquelle est inséré le ressort de rappel réalisé sous la forme d'un ressort de compression (42), que les patins parallèles (56, 57) sont munis d'un élément de liaison en forme de U (58) à leur extrémité opposée au dispositif de blocage (48), et que le ressort de compression (42) porte d'une part contre cet élément de liaison en forme de U (58) du chariot et d'autre part contre le pont (16).

3. Lunettes selon la revendication 2, caractérisées par le fait que le ressort (42) inséré dans la cavité (41) du chariot (16) est recouvert par une languette (61) qui est reliée au pont (16).

4. Lunettes selon la revendication 3,
caractérisées par le fait que la languette (61) est munie d'une tige filetée (63) et d'une broche de blocage (62) disposée à distance de la tige, qui pénètrent dans les trous (37, 38) correspondants, et que la languette (61) est fixée sur le pont (16) par un écrou douille (66) qui est vissé sur la tige filetée (63).

5. Lunettes selon l'une des revendications 1 à 4,
caractérisées par le fait que la surface frontale supérieure (64) de la languette (61) forme le bord de butée pour une contre-butée (54) du chariot (46) en position de fermeture.

6. Lunettes selon l'une des revendications 1 à 5,
caractérisées par le fait que, entre la languette (61) et une zone opposée (39) du pont (16), les patins (56, 57) sont guidés dans leur partie qui est éloignée des rainures de guidage (33, 34).

FIG.1

FIG.2

FIG.3

FIG. 4

FIG. 5

FIG. 6